# EUROPÄISCHE PATENTSCHRIFT

(11) **EP 4 196 705 B1**
(45) Veröffentlichungstag und Bekanntmachung des Hinweises auf die Patenterteilung: **25.09.2024**
(21) Anmeldenummer: 21762415.4
(22) Anmeldetag: 11.08.2021
(51) Int. Cl.: F16K 3/24, F16K 27/02, F15B 13/04, F15B 13/08, F16K 27/04, F16K 31/122

(54) **HYDRAULIK-EINBAUVENTIL**
HYDRAULIC BUILT-IN VALVE
SOUPAPE HYDRAULIQUE INTÉGRÉE

(30) Priorität: 12.08.2020 DE 102020210248
(43) Veröffentlichungstag der Anmeldung: 21.06.2023
(73) Patentinhaber: Moog Luxembourg Sàrl, 3290 Bettembourg (LU)
(72) Erfinder: JOST, Frank, 54343 Föhren (DE); WAGNER, Jörg, 54310 Ralingen (DE); WIEGANDT, Marco, 71034 Böblingen (DE); LE GORE, Jason, 8086 Bertrange (LU)
(74) Vertreter: Wittmann, Ernst-Ulrich
(86) Internationale Anmeldenummer: PCT/EP2021/072373
(87) Internationale Veröffentlichungsnummer: WO 2022/034133

(56) Entgegenhaltungen:
- WO-A1-2015/117845
- US-A- 3 776 278
- US-A- 6 003 551
- US-A1- 2004 071 044
- US-A1- 2004 099 832
- US-A1- 2019 195 046

## Beschreibung

Die vorliegende Erfindung betrifft ein Hydraulik-Einbauventil. Sie betrifft insbesondere ein Zwei-Wege Hydraulik-Einbauventil mit Drossel- und Sperrfunktion, insbesondere ein Servo- und Regelcartridge. Zudem umfasst die vorliegende Erfindung eine Ventilanordnung mit einem erfindungsgemäßen Hydraulik-Einbauventil, sowie eine hydraulische Anlage mit einer Ventilanordnung.

Hydraulik-Einbauventile, insbesondere Zwei-Wege Hydraulik-Einbauventile in Sitzbauweise auch Cartridge-Ventile genannt, sind im Stand der Technik bekannt und werden im großen Umfang in der hydraulischen Steuertechnik als Druck-, Wege- oder Sperrventile eingesetzt.

Ein Hydraulik-Einbauventil in Sitzbauweise wird beispielsweise in dem Dokument EP 3 514 418 A1 beschrieben. Ein solches klassisches Zwei-Wege Hydraulik-Einbauventil in Sitzbauweise (oder Cartridge-Ventil) umfasst eine in den Ventilblock einbringbare Hülse und ein Schließelement. Die Hülse ist mit einem oberen Endbereich fest mit dem Ventilblock verbindbar. Die Hülse weist einen dem oberen Endbereich gegenüberliegenden unteren Endbereich auf, wobei der untere Endbereich in einem Stirnende eine Stirnöffnung aufweist und einen Steckring ausbildet, wobei der Steckring in eine Aufnahmebohrung des Ventilblocks einbringbar ist und einen Außenumfang mit einem Steckringdurchmesser aufweist. Die Hülse bildet zwischen dem oberen Endbereich und dem unteren Endbereich einen Mantel aus, wobei der Mantel mehrere durch Stege getrennte Radialöffnungen aufweist und das Schließelement in der Hülse angeordnet ist. Das Schließelement zwischen einer Öffnungsstellung und einer Sperrstellung beweglich ist, wobei in der Öffnungsstellung eine Fluidverbindung zwischen der Stirnöffnung und den Radialöffnungen freigegeben ist und in der Sperrstellung die Fluidverbindung zwischen der Stirnöffnung und den Radialöffnungen versperrt ist. Durch die in der Mantelwand der Hülse ausgebildete Radialöffnungen, die in der Regel als Querbohrung oder als halbrunde Ausfräsungen ausgebildet sind, wird das Fluid von einem A-Anschluss durch die Radialöffnung bei einem in der Öffnungsstellung befindlichen Schließelement hindurch zu einem B-Anschluss bzw. von dem B-Anschluss zu dem A-Anschluss geleitet. Bei dieser Bauweise ist nachteilig, dass die Radialöffnungen der Hülse bei dem Einbringen des Einbauventils in den Ventilblock derart angeordnet sein können, dass die Radialöffnungen nicht in der für die Fluidströmung optimalen Ausrichtung mit dem B- Anschluss liegen, wodurch Verwirbelungen und/oder Reibung an den Radialöffnungen auftreten, die zu Druckverlusten führen. Um diese Störungen zu mindern bedarf es zusätzlicher Ausrichtungsmechanismen, welche die Ausgestaltung und Produktion der Einbauventile aufwendiger und somit zeit- und kostenintensiv machen. Andernfalls muss ein Anwender bei der Installation die Einbauventile derart platzieren, dass ein Maximum an Durchfluss erzielt wird. Hierdurch wird die Installation und/oder Wartung aufwendiger. Zudem weisen die Radialöffnungen eine Durchlassöffnung bzw. Durchmesser auf, welche das über den B-Anschluss oder A-Anschluss mit einem spezifischen Druck bereitgestellte Fluid nicht ohne Druckminderung durchleiten können, so dass ferner erhöhte Druckverluste und somit Energieverluste als gewünscht eintreten können.

Ein weiteres Hydraulik-Einbauventil gemäß dem Oberbegriff des Anspruchs 1 zur Steuerung eines Flüssigkeitsstroms innerhalb eines Flüssigkeitsversorgungsnetzes einer Schneidmaschine, wie z.B. einer Bergbau- oder Bohrvorrichtung, ist ferner aus der WO 2015/117845 A1 bekannt.

Ausgehend davon, liegt der vorliegenden Erfindung die technische Aufgabe zugrunde, die im Stand der Technik bekannten Nachteile wenigstens teilweise zu überwinden, um die Druckverluste an dem Hydraulik-Einbauventil zu minimieren.

Diese Aufgabe wird durch die Gegenstände der unabhängigen Patentansprüche gelöst, insbesondere durch ein Hydraulik-Einbauventil und eine Ventilanordnung. Vorteilhafte Ausführungsformen der Erfindung sind in den unabhängigen Patentansprüchen und der nachfolgenden Beschreibung beschrieben. Der Schutzumfang wird durch die beigefügten Ansprüche definiert.

Gemäß einem ersten Aspekt bezieht sich die Erfindung auf ein Hydraulik-Einbauventil für einen Ventilblock. Das Hydraulik-Einbauventil umfasst eine in den Ventilblock einbringbare Hülse und ein Schließelement. Die Hülse umfasst einen ersten Endbereich. Der erste Endbereich ist mit dem Ventilblock verbindbar. Die Hülse umfasst einem dem ersten Endbereich gegenüberliegenden zweiten Endbereich. Der zweite Endbereich weist in einem Stirnende eine Stirnöffnung auf. Die Hülse bildet zwischen dem ersten Endbereich und dem zweiten Endbereich einen Mantel mit einer Außenseite und einer Innenseite aus. Der Mantel der Hülse weist eine Vielzahl durch Mantelstege getrennte Manteldurchbrüche auf. Das Schließelement ist in der Hülse bewegbar angeordnet. Ferner ist das Schließelement zwischen einer ersten Stellung und einer zweiten Stellung bewegbar. In einer ersten Stellung des Schließelementes wird eine Fluidverbindung zwischen der Stirnöffnung und den Manteldurchbrüchen freigegeben und in der zweiten Stellung wird eine Fluidverbindung zwischen der Stirnöffnung und den Manteldurchbrüchen versperrt. Das Hydraulik-Einbauventil zeichnet sich dadurch aus, dass sich die Manteldurchbrüche entlang des Mantels verlaufend (in Richtung) von dem ersten Endbereich zu dem zweiten Endbereich erstrecken und eine Durchbruchshöhe ausbilden und die Manteldurchbrüche ein Höhe-Breite-Verhältnis von wenigstens 3:1 aufweisen.

Der vorliegenden Erfindung liegt die Kenntnis zu Grunde, dass ein Bedarf für ein Hydraulik-Einbauventil besteht, welches sich durch einen vereinfachten Einbau, der keine Orientierung des Einbauventils zum B-Anschluss im Steuerblock erfordert, bei verbesserten Strömungsbedingungen und Fluiddrücken auszeichnet.

In vorteilhafter Weise ist durch die vorliegende Erfindung, insbesondere durch die Ausgestaltung der Manteldurchbrüche eine bewusst ausgerichtete Installation des Hydraulik-Einbauventils in dem Ventilblock nicht erforderlich. Durch die Manteldurchbrüche wird eine verbesserte Durchströmung des Hydraulik-Einbauventils erreicht, womit die Druckverluste durch das Hydraulik-Einbauventil bei gleicher Ventilnenngröße um 40 bis 50% zum vergleichbaren Stand der Technik verbessert und somit verringert sind.

Vorteilhafte Ausführungsformen und Weiterbildungen ergeben sich aus den Unteransprüchen, sowie aus der Beschreibung unter Bezugnahme auf die Figuren.

In einer bevorzugten Ausführungsform weisen die Manteldurchbrüche ein Höhe-Breite-Verhältnis von mehr als 4:1 auf. In vorteilhafter Weise wird durch ein vergrößertes Höhe-Breite-Verhältnis, insbesondere von 4:1, eine höhere Unabhängigkeit des Durchflusswerts von der Orientierung des Hydraulik-Einbauventils zum B-Anschluss im Steuerblock erzielt. Allerdings haben gemäß dem Stand der Technik bekannte Ausführungen gezeigt, dass eine erhöhte Anzahl an Durchbrüchen den Durchflusswert verschlechtern kann, da hierdurch auch die Anzahl der Stege zunimmt. Es wurde ermittelt, dass je nach Ausführung der beste Wert für den Durchfluss mit Manteldurchbrüchen mit einem Höhe-Breite-Verhältnis zwischen 3:1 und 5:1, vorwiegend im Bereich von 4:1 erzielt werden kann. Allerdings stellt die praktische Anwendbarkeit keine Einschränkung für die Verwendung von einem Verhältnis von mehr als 3:1 bis 5:1 in einer bevorzugten Ausführungsform dar.

In einer Ausführungsform der Erfindung ist die Breite der Mantelstege im Verlauf beginnend von der Mantelaußenseite hin zu der Mantelinnenseite gleichbleibend. In vorteilhafter Weise wird der Strom des Fluid kanalisiert und es ergeben sich verbesserte Strömungsbedingungen wodurch verringerte Druckverluste eintreten.

In einer weiteren Ausführungsform nimmt die Breite der Manteldurchbrüche im Verlauf beginnend von der Mantelaußenseite hin zu der Mantelinnenseite ab. In vorteilhafter Weise verjüngt sich die Breite der Manteldurchbrüche von der Mantelaußenseite verlaufend hin zu der Mantelinnenseite. Somit wird in vorteilhafter Weise eine verbesserte Kanalisierung des Fluid und somit ein verbesserter Strom des Fluid erreicht.

In einer weiteren erfindungsgemäßen Ausführungsform umfasst die Breite der Manteldurchbrüche an der Mantelinnenseite mindestens eine Breite in einem Bereich von 20 bis 90%, vorzugsweise 60 bis 80%, besonders bevorzugt 73 bis 80% der Manteldurchbrüche an der Mantelaußenseite. Im Stand der Technik bekannte Hydraulik-Einbauventile weisen Radialöffnungen mit einer gleichbleibenden Breite im Verlauf von der Mantelaußenseite zur Mantelinnenseite auf. Durch die erfindungsgemäße Ausgestaltung wird der Fluidstrom jeweils stärker kanalisiert, wodurch ein verbesserter Fluidstrom, welcher aus den verringerten Druckverlusten resultiert, erzielt wird.

In einer weiteren Ausführungsform sind in dem Mantel wenigstens 8, vorzugsweise 10 oder mehr Manteldurchbrüche in der Umfangsrichtung des Mantels nebeneinander ausgebildet. Zudem bilden die Manteldurchbrüche trennenden Mantelstege in der Umfangsrichtung in Summe eine Breite von maximal 25% des Mantelaußenumfangs, vorzugsweise 20% des Mantelaußenumfangs aus. Durch die erfinderische Ausgestaltung mit wenigstens 8, vorzugsweise 10 oder mehr Manteldurchbrüchen ist eine höhere Unabhängigkeit bei der Ausrichtung der Manteldurchbrüche zum entsprechenden Anschluss im Ventilblock gegeben. Somit müssen die Manteldurchbrüche bei der Installation des Hydraulik-Einbauventils in dem Ventilblock nicht ausgerichtet werden. Somit werden keine aufwendigen Ausrichtungsmechanismen benötigt, womit das Hydraulik-Einbauventil effizient und kostengünstig installierbar ist. Die Anzahl der Manteldurchbrüche kann in Abhängigkeit des Mantelinnen- und Außendurchmessers des Zylinders, insbesondere dessen Konstruktion gewählt sein. Insbesondere kann die Anzahl der Manteldurchbrüche durch die Breite der Mantelstege und somit deren Festigkeit in Verbindung mit dem Mantelinnen- und Außendurchmessers des Zylinders festgelegt sein.

In einer weiteren Ausführungsform bilden die Manteldurchbrüche in dem Mantel in Summe eine Breite von wenigstens 75% des Mantelaußenumfangs, vorzugsweise 80% des Mantelaußenumfangs aus. In vorteilhafter Weise kann somit sichergestellt werden, dass eine genügend große Fläche an Manteldurchbrüchen dem fluidbereitstellenden Anschluss gegenüberliegt und das Fluid mit möglichst geringen Druckverluste in das Hydraulik-Einbauventil geleitet wird.

In einer weiteren Ausführungsform sind die Manteldurchbrüche in ihrer Erstreckung von der Mantelaußenseite zur Mantelinnenseite trapezförmig zulaufend ausgebildet. Die trapezförmige Ausgestaltung der Manteldurchbrüche hat strömungstechnische Vorteile gegenüber einer beispielsweise rechteckigen Ausbildung. Die trapezförmige Ausgestaltung mit einem von außen nach innen schmaler werdenden Verlauf ist vorteilhaft für den Fluidstrom. Zudem ist die Trapezform die technisch effizient und kostengünstig zu realisierende Variante des schmaler werdenden Durchbruchs.

In einer weiteren Ausführungsform weist das Schließelement eine Dichtfläche zum Eingriff in eine in der Hülse ausgebildete komplementäre Dichtfläche auf, um in wechselwirkender Abdichtung eine Fluidverbindung in der zweiten Stellung zu versperren. In einigen Ausgestaltungen ist die Dichtfläche als eine Kante ausgeführt, welche eine komplementäre Abdichtung mit der Dichtfläche des Schließelementes ausbildet. Über die Dichtfläche wird eine leckagefreie Abdichtung umgesetzt, um in der zweiten Stellung des Schließelementes (Sperrstellung) einen Fluiddurchtritt zu vermeiden.

In einer weiteren erfindungsgemäßen Ausführungsform weist das Schließelement ausgehend von der Dichtfläche des Schließelements mit einem ersten Durchmesser einen taillierten Verlauf über einen zweiten Durchmesser in der Erstreckungsmitte des Schließelements zu einem dritten Durchmesser auf. Der erste und der dritte Durchmesser des Schließelementes weisen jeweils unterschiedliche Durchmesser auf. In vorteilhafter Weise ergibt sich durch den taillierten Verlauf des Schließelementes ein weiterer Durchströmungsraum im Inneren des Hydraulik-Einbauventils zwischen dem Schließelement und der Ventilhülse. Somit kann ein verbesserter Fluidstrom beim Durchströmen des Hydraulik-Einbauventils erzielt werden. Zudem werden durch die taillierte Ausgestaltung des Schließelementes Verwirbelungen reduziert und dass Fluid wird verbessert zur entsprechenden Öffnung des Hydraulik-Einbauventils geleitet.

In einer weiteren Ausführungsform weist die Hülse einen Befestigungsmechanismus auf, der ausgebildet ist, die Hülse in einem Steuerdeckel des Steuerblocks zum Steuern des Hydraulik-Einbauventils aufzunehmen, insbesondere die Hülse zu fixieren. Über den Befestigungsmechanismus wird die Hülse fest mit dem Steuerdeckel verbunden, beispielsweise axial und radial. Über die Verbindung mit dem Steuerdeckel wird die Hülse auch fest mit dem Steuerblock bzw. der Einbaukavität verbunden. In einer Ausführungsform kann die Hülse mit dem Steuerdeckel verschraubt werden. Somit werden alle wirkenden Kräfte in dem Deckel abgefangen und die Belastungen auf die Stege vermindert. Somit kann in vorteilhafter Weise die Breite der Manteldurchbrüche maximiert werden.

Ein zweiter Aspekt der vorliegenden Erfindung umfasst eine Ventilanordnung mit einem Ventilblock und einem Hydraulik-Einbauventil mit einer in den Ventilblock einbringbaren Hülse und einem Schließelement nach einem der vorherigen Ansprüche. Der Ventilblock weist eine gestufte Aufnahmeöffnung auf, in der das Hydraulik-Einbauventil angeordnet ist. Der Ventilblock weist einen der Stirnöffnung zugeordneten A-Anschluss und einen den Manteldurchbrüchen frei zugeordneten B-Anschluss auf. Über die Möglichkeit der freien Zuordnung der Manteldurchbrüche gegenüber dem B-Anschluss entfällt eine aufwendige Ausrichtung der Manteldurchbrüche.

In einer Ausführungsform gemäß dem zweiten Aspekt, kann ein Ventilblock mit weiteren Anschlüssen, beispielsweise einem C-Anschluss usw. vorgesehen sein.

In einer weiteren Ausführungsform des zweiten Aspekts der vorliegenden Erfindung weisen die Manteldurchbrüche eine Durchbruchhöhe von wenigstens 90% des genormten Anbohrbereiches des B-Anschlusses auf. Der Anbohrbereich des B-Anschlusses weist eine spezifische Höhe gemäß der Norm ISO 7368 auf. Die Durchbruchhöhe der Manteldurchbrüche weisen wenigstens 90% des Anbohrbereiches auf. Somit werden Verwirbelungen an der Öffnung der Manteldurchbrüche reduziert und der Durchfluss des Fluid in das Hydraulik-Einbauventil verbessert bzw. Druckverluste im Vergleich zum Stand der Technik verringert. Gemäß Ausgestaltungen kann die Durchbruchhöhe der Manteldurchbrüche auch von dem genormten Anbohrbereich weiterer Anschlüsse abhängen.

In einer weiteren Ausführungsform des zweiten Aspekts der vorliegenden Erfindung weist die Stirnöffnung einen ersten Durchmesser auf, der vorzugsweise mindestens 90% eines zweiten Durchmessers der einbringbaren Hülse entspricht. Der zweite Durchmesser der einbringbaren Hülse ist in dem Bereich der Hülse ausgebildet, welcher in den A-Anschluss aufgenommen ist. Somit beschreibt der zweite Durchmesser den Außendurchmesser des Bereichs der einbringbaren Hülse, welcher durch den A-Schluss aufgenommen wird. Durch die eingeschraubte (axial fixierte) Ventilhülse wird der Absatz in der Blockbohrung nicht mehr benötigt. Deswegen kann die Stirnöffnung an der Ventilhülse wesentlich größer ausgeführt werden, als die entsprechende Norm angibt (genormter Durchmesser des A-Anschlusses).

Ein weiterer Aspekt der vorliegenden Erfindung umfasst eine Hydraulische Anlage. Die hydraulische Anlage umfasst wenigstens eine hydraulisch angetriebene Komponente und eine Ventilanordnung nach einem der Ansprüche des zweiten Aspekts der vorliegenden Erfindung zum Steuern und/oder Schalten und/oder Sperren der hydraulisch angetriebenen Komponente.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserung oder Ergänzungen zu der jeweiligen Grundform der vorliegenden Erfindung hinzufügen.

Die vorliegende Erfindung wird nachfolgend anhand der in den schematischen Figuren der Zeichnungen angegebenen Ausführungsbeispiele näher erläutert. Es zeigen dabei:
Fig. 1 eine schematische Darstellung einer Ausführungsform eines Hydraulik-Einbauventils gemäß der vorliegenden Erfindung;
Fig. 2 eine schematische Darstellung einer weiteren Ausführungsform eines Hydraulik-Einbauventils gemäß der vorliegenden Erfindung mit detailliert dargestellter Hülse; und
Fig. 3 eine schematische Darstellung einer Ausführungsform der Hülse des Hydraulik-Einbauventils gemäß der vorliegenden Erfindung in der Draufsicht.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche, und gleich wirkende Elemente, Merkmale und Komponenten - sofern nichts anderes ausgeführt ist - jeweils mit denselben Bezugszeichen zu versehen.

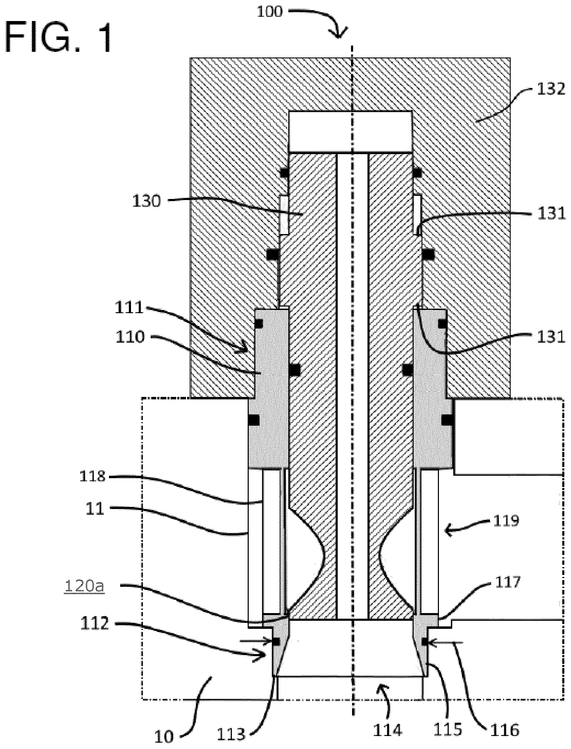

Fig. 1 zeigt eine schematische Darstellung einer Ausführungsform eines Hydraulik-Einbauventils gemäß der vorliegenden Erfindung. Bezugszeichen 100 beschreibt das besagte Hydraulik-Einbauventil. Das Hydraulik-Einbauventil 100 ist in den Ventilblock 10 (dargestellt durch die gestrichelte Linie) eingesetzt dargestellt. Das Hydraulik-Einbauventil 100 weist eine in den Ventilblock 10 einbringbare Hülse 110 auf. Zudem weist das Hydraulik-Einbauventil 100 ein Schließelement 130 auf. Das Schließelement 130 ist in der Hülse 110 bewegbar angeordnet. Die Hülse 110 weist einen ersten Endbereich 111 auf. Zudem weist die Hülse 110 einen zweiten dem ersten Endbereich 111 gegenüberliegenden Endbereich 112 auf. Der zweite Endbereich 112 weist in einem Stirnende 113 eine Stirnöffnung 114 auf. Das Stirnende 113 weist einen Durchmesser zur Aufnahme am A-Anschluss mit einem genormten Durchmesser auf. In einer Ausführungsform weist das Stirnende 113 eine durchflussoptimierte Geometrie zu dem Durchmesser am A-Anschluss auf.

Die Hülse 110 bildet zwischen dem ersten Endbereich 111 und dem zweiten Endbereich 112 einen Mantel 117 aus. Der Mantel 117 weist eine Außenseite und eine Innenseite auf. Der Mantel 117 der Hülse 110 weist eine Vielzahl durch Mantelstege 118 getrennte Manteldurchbrüche 119 auf. Ein Manteldurchbruch 119 stellt eine fluidleitende Öffnung bzw. Verbindung zwischen der Außenseite und der Innenseite des Mantels 117 der Hülse 110 dar. Ein Mantelsteg 118 bildet eine Abtrennung zwischen zwei benachbarten Manteldurchbrüchen 119 aus.

Das in der Hülse 110 bewegbar angeordnete Schließelement 130 ist zwischen einer ersten Stellung und einer zweiten Stellung bewegbar. In der ersten Stellung des Schließelementes 130 wird eine Fluidverbindung zwischen der Stirnöffnung 114 und den Manteldurchbrüchen 119 freigegeben. In dieser Stellung des Schließelementes 130 ist ein Fluidstrom von einem A-Anschluss zu einen B-Anschluss bzw. von einem B-Anschluss zu einem A-Anschluss möglich. In der zweiten Stellung des Schließelementes 130 wird eine Fluidverbindung zwischen der Stirnöffnung 114 und der Manteldurchbrüche 119 versperrt. In dieser Stellung des Schließelementes 130 ist kein Fluidstrom von einem A- Anschluss zu einen B-Anschluss bzw. von einem B-Anschluss zu einem A-Anschluss möglich.

In einer Ausführungsform umfasst das Schließelement 130 einen taillierten Verlauf. Insbesondere umfasst das Schließelement 130 einen ersten Durchmesser, welcher ausgebildet ist eine fluiddichte Abdichtung mit der in der Hülse 110 komplementär ausgebildeten Dichtfläche 120a auszubilden. In der Erstreckungsmitte umfasst das Schließelement einen zweiten Durchmesser, welcher derart ausgebildet ist, dass sich die taillierte Form des Schließelementes 130 ergibt. Zur fluiddichten Abdichtung ist der zweite Durchmesser ein geringerer als der erste Durchmesser. Fortlaufend von der Erstreckungsmitte umfasst das Schließelement 130 einen dritten Durchmesser, welcher größer ausgebildet ist als der zweite Durchmesser. Der erste Durchmesser und der dritte Durchmesser des Schließelementes 130 können in einer Ausgestaltung unterschiedliche Durchmesser aufweisen. Durch die taillierte Ausgestaltung des Schließelementes 130 wird mehr Querschnittsfläche in der Hülse 110 ausgebildet, wodurch eine verbesserte Durchströmung erzielt und Druckverluste minimiert werden.

Die Manteldurchbrüche 119 in dem Mantel 117 sind in ihrer Erstreckung von der Mantelaußenseite zur Mantelinnenseite trapezförmig zulaufend ausgebildet. In einer Ausführungsform nimmt die Breite der Manteldurchbrüche 119 insbesondere im Verlauf beginnend von der Mantelaußenseite hin zu der Mantelinnenseite des Mantels 117 ab.

In einem Ausführungsbespiel weist der Ventilblock 10 eine gestufte Aufnahmeöffnung 11 auf, in der das Hydraulik-Einbauventil 100 aufgenommen und angeordnet ist. Die gestufte Aufnahmeöffnung 11 nimmt einen Durchmesssprung des Außendurchmessers der Hülse 110 auf. Über die gestufte Aufnahmeöffnung 11 und den Durchmessersprung kann die Hülse fluiddicht in den Ventilblock 10 eingebracht werden.

In einem weiteren Ausführungsbeispiel ist die Hülse 110 mit dem Steuerdeckel 132 fest verbunden. Die Hülse 110 ist fest an dem Steuerdeckel 132 fixiert, beispielsweise ist die Hülse im Steuerdeckel 132 verschraubt. Es wird eine axiale und radiale Verbindung zwischen der Hülse 110 und dem Steuerdeckel 132 hergestellt. Über die feste Verbindung zwischen der Hülse 110 und dem Steuerdeckel 132 ist die Hülse 110 fest mit dem Steuerblock (nicht dargestellt), bzw. der Einbaukavität verbunden. Durch ein Verbinden der Hülse 110 mit dem Steuerdeckel 132 werden alle wirkenden Kräfte im Steuerdeckel 132 abgefangen.

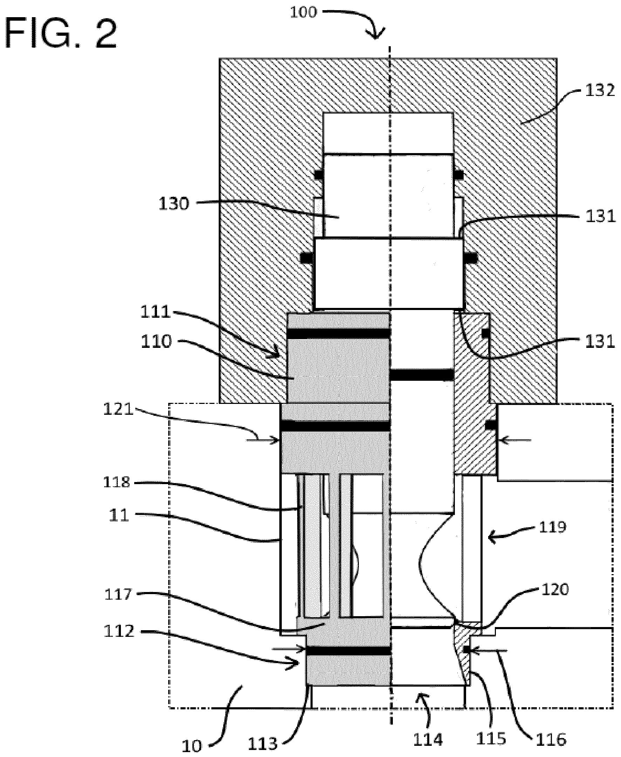

Fig. 2 zeigt eine schematische Darstellung einer weiteren Ausführungsform eines Hydraulik-Einbauventils gemäß der vorliegenden Erfindung mit detailliert dargestellter Hülse. In der Fig. 2 ist die Ausgestaltung der Manteldurchbrüche 119 und der Mantelstege 118 in einem Halbschnitt des Hydraulik-Einbauventils 110 ersichtlich. Die Manteldurchbrüche 119 sind in dem Mantel 117 in ihrer Erstreckung von der Mantelaußenseite zur Mantelinnenseite trapezförmig zulaufend ausgebildet. Über die trapezförmigen Manteldurchbrüche 119 wird das Fluid zum Inneren der Hülse 110 geleitet. In einer bevorzugten Ausführungsform verjüngt sich der trapezförmige Querschnitt der Manteldurchbrüche 119 verlaufend von der Mantelaußenseite hin zu der Mantelinnenseite. Die Breite der Mantelstege ist gleichbleibend. Dementsprechend nimmt die Breite der Manteldurchbrüche 119 ab. Das Fluid wird somit von dem großen Querschnitt des B-Anschlusses in das Hydraulik-Einbauventil 100 hineingeleitet. Alternativ wird das Fluid von dem A-Anschluss kommend und von dem kleinen Querschnitt in dem Hydraulik-Einbauventil 100 zum B-Anschluss geleitet.

In einer erfindungsgemäßen Ausführungsform des Hydraulik-Einbauventils 100 erstrecken sich die Manteldurchbrüche 119 entlang des Mantels 117 verlaufend von dem ersten Endbereich 111 zu dem zweiten Endbereich 112 und bilden eine Durchbruchhöhe aus. Die Manteldurchbrüche 119 weisen in einer erfindungsgemäßen Ausführungsform ein Verhältnis von Höhe zu Breite von wenigstens 3:1, bevorzugt von 4:1 auf. In vorteilhafter Weise müssen die Manteldurchbrüche 119 somit nicht genau gegenüber der Bohrung des B-Anschlusses ausgerichtet werden, um einen optimalen Fluidfluss bei entsprechendem Druck zu erzielen. Durch die Durchbruchhöhe der Manteldurchbrüche 119 ist sichergestellt, dass das Fluid mit dem notwendigen Druck über die Manteldurchbrüche 119 in das Innere des Hydraulik-Einbauventils 100 eingeleitet wird, bzw. aus dem Hydraulik-Einbauventils 100 entweichen kann. Ein manuelles Platzieren durch einen Anwender und/oder die Verwendung eines Platzierungsmechanismus ist nicht erforderlich. Zudem weisen im Stand der Technik bekannte Einbauventile üblicherweise nur kreisförmige Bohrungen auf, die den Manteldurchbruch realisieren. Mit einer erhöhten Anzahl an kreisförmigen Bohrungen treten allerdings höhere Druckverluste auf. Um die Druckverluste zu minimieren werden vier annähernd quadratisch ausgebildete Radialöffnungen vorgesehen, welche ausgebildet wurden, um die Druckverluste zu minimieren. Allerdings ergibt sich durch die begrenzte Anzahl an Radialöffnungen, dass diese nicht mehr unabhängig zur B-Bohrung der Einbaubohrung sind. Ein Anwender muss die B-Bohrung der Einbaubohrung am Umfang derart platzieren, so dass die B-Bohrung und die Radialöffnungen zueinander stehen. Dies ist durch die vorteilhafte Ausgestaltung der vorliegenden Erfindung nicht notwendig, da die Fläche der Manteldurchbrüche eine größtmögliche Öffnung zum B-Anschluss bereitstellt. Durch die Ausgestaltung werden die Druckverluste bei gleichzeitiger Einbringung in den B-Anschluss mit größtmöglicher Überlagerung der Manteldurchbrüche mit dem B-Anschluss minimiert. In einer weiteren Ausgestaltung können die Manteldurchbrüche in ihrer Längserstreckung durch einen Steg in gleiche oder ungleiche Teile unterteilt werden. Der Steg kann hierbei zur Stützung der Mantelstege dienen. Dies ist dann vorteilhaft, wenn die Breite der Manteldurchbrüche maximiert ist und somit die Breite der Mantelstege derart minimiert, dass diese nicht die Kräfte des Fluid aufnehmen könnten. Somit kann die Erstreckung der Manteldurchbrüche entlang des Mantels verlaufend von dem ersten Endbereich zu dem zweiten Endbereich auch eine Unterbrechung des Manteldurchbruchs durch einen Steg umfassen.

In einer Ausführungsform weisen die Manteldurchbrüche 119 eine Durchbruchshöhe von wenigstens 90% des genormten Anbohrbereiches (Durchmesser) des B-Anschluss auf. In Ausgestaltungen weist die Durchbruchshöhe mindestens 100% des genormten Anbohrbereiches des B-Anschlusses auf. In vorteilhafter Weise kann somit ein Verlust an Fluiddruck bei dem Übergang von dem B-Anschluss in das Hydraulik-Einbauventil 100 bzw. andersherum verringert werden.

In der Fig. 2 ist die gestufte Aufnahmeöffnung 11 dargestellt. Die Aufnahmeöffnung 11 nimmt einen Durchmessersprung des Außendurchmessers 121 der Hülse 110 auf. Ferner ist in Fig. 2 der zweite Durchmesser 116 als Außendurchmesser der einbringbaren Hülse 110 dargestellt. Der Außendurchmesser 116 ist vorliegend als Steckring ausgeführt. Der Außendurchmesser 116 der einbringbaren Hülse 110 erstreckt sich über den Bereich der Hülse 110, welcher in den A-Anschluss aufgenommen wird.

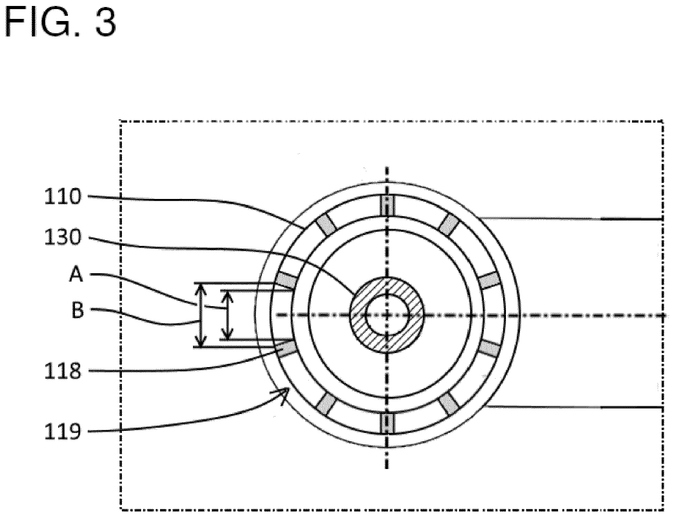

Fig. 3 zeigt eine schematische Darstellung einer Ausführungsform der Hülse des Hydraulik-Einbauventils gemäß der vorliegenden Erfindung in der Draufsicht. Die Hülse 110 weist eine Vielzahl an Manteldurchbrüchen 119 auf, die durch Mantelstege 118 getrennt werden. Die Manteldurchbrüche 119 in dem Mantel 117 weisen in Summe eine Breite von wenigstens 75% des Mantelaußenumfangs, vorzugsweise von 80% des Mantelaußenumfangs auf. Die Breite der Mantelstege 118 ist im Verlauf von der Außenseite des Mantels 117 zur Innenseite des Mantels 117 gleichbleibend. Die Breite 5 der Manteldurchbrüche 119 verjüngt sich von einer ersten Breite B an der Außenseite des Mantels 117 verlaufend zu einer zweiten Breite A an der Innenseite des Mantels 117. Somit ergibt sich der bevorzugte trapezförmige Querschnitt.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 10: Ventilblock
- 11: gestufte Aufnahmeöffnung
- 100: Hydraulik-Einbauventil
- 110: Hülse
- 111: erster Endbereich
- 112: zweiter Endbereich
- 113: Stirnende
- 114: Stirnöffnung
- 115: Durchmesser Stirnöffnung
- 116: Durchmesser Hülse
- 117: Mantel
- 118: Mantelstege
- 119: Manteldurchbrüche
- 120: Dichtfläche des Schließelements
- 120a: Dichtfläche der Hülse
- 121: Außendurchmesser
- 130: Schließelement
- 131: Flächen zum Steuern
- 132: Steuerdeckel
- A: Breite der Manteldurchbrüche an der Mantelinnenseite
- B: Breite der Manteldurchbrüche an der Mantelaußenseite

## Patentansprüche

1. Hydraulik-Einbauventil (100) für einen Ventilblock (10), umfassend eine in den Ventilblock (10) einbringbare Hülse (110) und ein Schließelement (130), wobei
- die Hülse (110) einen ersten Endbereich (111) umfasst und der erste Endbereich (111) mit dem Ventilblock (10) verbindbar ist,
- die Hülse (110) einem dem ersten Endbereich (111) gegenüberliegenden zweiten Endbereich (112) umfasst, wobei der zweite Endbereich (112) in einem Stirnende (113) eine Stirnöffnung (114) aufweist, und
- die Hülse (110) zwischen dem ersten Endbereich (111) und dem zweiten Endbereich (112) einen Mantel (117), mit einer Außenseite und einer Innenseite, ausbildet und der Mantel (117) der Hülse (110) eine Vielzahl durch Mantelstege (118) getrennte Manteldurchbrüche (119) aufweist, und
- das Schließelement (130) in der Hülse (110) bewegbar angeordnet ist, wobei das Schließelement (130) zwischen einer ersten Stellung und einer zweiten Stellung bewegbar ist und wobei in der ersten Stellung eine Fluidverbindung zwischen der Stirnöffnung (114) und den Manteldurchbrüchen (119) freigegeben ist und in der zweiten Stellung eine Fluidverbindung zwischen der Stirnöffnung (114) und den Manteldurchbrüchen (119) versperrt ist,
wobei sich die Manteldurchbrüche (119) entlang des Mantels (117) verlaufend von dem ersten Endbereich (111) zu dem zweiten Endbereich (112) erstrecken und eine Durchbruchshöhe ausbilden, und
wobei das Schließelement (130) ausgehend von einer Dichtfläche (120) des Schließelements (130) mit einem ersten Durchmesser einen taillierten Verlauf über einen zweiten Durchmesser in der Erstreckungsmitte des Schließelements (130) zu einem dritten Durchmesser, aufweist, wobei der zweite Durchmesser ein geringerer als der erste Durchmesser ist, und der dritten Durchmesser größer ausgebildet als der zweite Durchmesser ist,
**dadurch gekennzeichnet, dass**
die Manteldurchbrüche ein Höhe-Breite-Verhältnis von wenigstens 3:1 aufweisen,
wobei die Manteldurchbrüche in dem Mantel in Summe eine Breite von wenigstens 75% des Mantelaußenumfangs, vorzugsweise 80% des Mantelaußenumfangs ausbilden,
wobei die Manteldurchbrüche (119) in dem Mantel (117) in ihrer Erstreckung von der Mantelaußenseite zur Mantelinnenseite trapezförmig zulaufend ausgebildet sind, wobei die Breite der Manteldurchbrüche (119) an der Mantelinnenseite in einem Bereich von 20 bis 90% der Manteldurchbrüche (119) an der Mantelaußenseite liegt.

2. Hydraulik-Einbauventil (100) nach Anspruch 1, wobei die Breite der Manteldurchbrüche (119) im Verlauf beginnend von der Mantelaußenseite hin zu der Mantelinnenseite abnimmt.

3. Hydraulik-Einbauventil (100) nach einem der vorherigen Ansprüche, wobei die Breite der Mantelstege (118) im Verlauf beginnend von der Mantelaußenseite hin zu der Mantelinnenseite gleichbleibend ist.

4. Hydraulik-Einbauventil (100) nach einem der vorherigen Ansprüche, wobei die Breite der Manteldurchbrüche (119) an der Mantelinnenseite in einem Bereich von 60 bis 80%, bevorzugt 73 bis 80% der Manteldurchbrüche (119) an der Mantelaußenseite liegt.

5. Hydraulik-Einbauventil (100) nach einem der vorherigen Ansprüche, wobei in dem Mantel (117) wenigstens 8, vorzugsweise 10 Manteldurchbrüche (119) in der Umfangsrichtung des Mantels (117) nebeneinander ausgebildet sind und wobei die die Manteldurchbrüche (119) trennenden Mantelstege (118) in der Umfangsrichtung in Summe eine Breite von maximal 25% des Mantelaußenumfangs, vorzugsweise 20% des Mantelaußenumfangs ausbilden.

6. Hydraulik-Einbauventil (100) nach einem der vorherigen Ansprüche, wobei das Schließelement(130) eine Dichtfläche (120) zum Eingriff in eine in der Hülse (110) ausgebildete komplementäre Dichtfläche (120a) aufweist, um in wechselwirkender Abdichtung eine Fluidverbindung in der zweiten Stellung zu versperren.

7. Hydraulik-Einbauventil (100) nach einem der vorherigen Ansprüche, wobei die Hülse (110) einen Befestigungsmechanismus aufweist, der ausgebildet ist, die Hülse in einem Steuerdeckel (132) eines Steuerblocks zum Steuern des Hydraulik-Einbauventils (100) aufzunehmen, insbesondere die Hülse zu fixieren.

8. Ventilanordnung (1) mit einem Ventilblock (10) und einem Hydraulik-Einbauventil (100) mit einem in den Ventilblock (10) einbringbare Hülse (110) und einem Schließelement (130) nach einem der vorherigen Ansprüche, wobei der Ventilblock (10) eine gestufte Aufnahmeöffnung (11) aufweist, in der das Hydraulik-Einbauventil (100) angeordnet ist und der Ventilblock (10) einen der Stirnöffnung (114) zugeordneten A-Anschluss und einen den Manteldurchbrüchen (119) frei zugeordneten B-Anschluss aufweist.

9. Ventilanordnung (1) nach Anspruch 8, wobei die Manteldurchbrüche (119) eine Durchbruchshöhe von wenigstens 90% des genormten Anbohrbereiches des B-Anschlusses aufweisen.

10. Ventilanordnung (1) nach Anspruch 9, wobei die Stirnöffnung (114) einen ersten Durchmesser (115) aufweist, der vorzugsweise mindestens 90% eines zweiten Durchmessers (116) der einbringbaren Hülse (110) entspricht.

11. Hydraulische Anlage mit wenigstes einer hydraulisch angetriebenen Komponente und einer Ventilanordnung (1) nach einem der Ansprüche 8 bis 10 zum Steuern und/oder Schalten und/oder Sperren der hydraulisch angetriebenen Komponente.

## Claims

1. Hydraulic built-in valve (100) for a valve block (10), comprising a sleeve (110) that is introducible into the valve block (10), and a closing element (130),
- the sleeve (110) comprising a first end region (111), and the first end region (111) being connectable to the valve block (10),
- the sleeve (110) comprising a second end region (112) which is at the opposite end from the first end region (111), the second end region (112) having a frontal opening (114) in a frontal end (113), and
- the sleeve (110) forming, between the first end region (111) and the second end region (112), a shell (117) having an outer side and an inner side, and the shell (117) of the sleeve (110) having a plurality of shell apertures (119) separated by shell partitions (118), and
- the closing element (130) being movably arranged in the sleeve (110), the closing element (130) being movable between a first position and a second position, and, in the first position, a fluidic connection between the frontal opening (114) and the shell apertures (119) being opened and, in the second position, a fluidic connection between the frontal opening (114) and the shell apertures (119) being closed off,
the shell apertures (119) extending along the shell (117) from the first end region (111) to the second end region (112) and providing an aperture height, and
the closing element (130), starting from a sealing surface (120) of the closing element (130) having a first diameter, tapering, via a second diameter, to a third diameter in the center of extension of the closing element (130), the second diameter being smaller than the first diameter, and the third diameter being larger than the second diameter,
**characterized in that**
the shell apertures have a height-width ratio of at least 3:1, the shell apertures in the shell providing a total width of at least 75% of the shell outer circumference, preferably 80% of the shell outer circumference, the shell apertures (119) in the shell (117) being trapezoidally tapered in their extension from the outer side of the shell to the inner side of the shell, the width of the shell apertures (119) on the inner side of the shell ranging from 20 to 90% of the shell apertures (119) on the outer side of the shell.

2. Hydraulic built-in valve (100) according to claim 1, wherein the width of the shell apertures (119) decreases in the course starting from the outer side of the shell toward the inner side of the shell.

3. Hydraulic built-in valve (100) according to either of the preceding claims, wherein the width of the shell partitions (118) is constant in the course from the outer side of the shell toward the inner side of the shell.

4. Hydraulic built-in valve (100) according to any of the preceding claims, wherein the width of the shell apertures (119) on the inner side of the shell ranges from 60 to 80%, preferably 73 to 80%, of the shell apertures (119) on the outer side of the shell.

5. Hydraulic built-in valve (100) according to any of the preceding claims, wherein at least 8, preferably 10, shell apertures (119) are formed in the shell (117) next to one another in the circumferential direction of the shell (117), and wherein the shell partitions (118) separating the shell apertures (119) provide in total a width of at most 25% of the outer shell circumference, preferably 20% of the outer shell circumference, in the circumferential direction.

6. Hydraulic built-in valve (100) according to any of the preceding claims, wherein the closing element (130) has a sealing surface (120) for engaging in a complementary sealing surface (120a) provided in the sleeve (110), in order to close off a fluidic connection in the second position in interactive sealing.

7. Hydraulic built-in valve (100) according to any of the preceding claims, wherein the sleeve (110) has a fastening mechanism which is designed to receive the sleeve, in particular to fix the sleeve, in a control cover (132) of a control block for controlling the hydraulic built-in valve (100).

8. Valve assembly (1) comprising a valve block (10) and a hydraulic built-in valve (100) having a sleeve (110) that is introducible into the valve block (10), and a closing element (130), according to any of the preceding claims, wherein the valve block (10) has a stepped receiving opening (11) in which the hydraulic built-in valve (100) is arranged and the valve block (10) has an A-connection assigned to the frontal opening (114) and a B-connection freely assigned to the shell apertures (119).

9. Valve assembly (1) according to claim 8, wherein the shell apertures (119) have an aperture height of at least 90% of the standardized drilling region of the B-connection.

10. Valve assembly (1) according to claim 9, wherein the frontal opening (114) has a first diameter (115) which preferably corresponds to at least 90% of a second diameter (116) of the introducible sleeve (110).

11. Hydraulic system comprising at least one hydraulically driven component and a valve assembly (1) according to any of claims 8 to 10 for controlling and/or switching and/or blocking the hydraulically driven component.

## Revendications

1. Soupape hydraulique intégrée (100) pour un bloc de soupape (10), comprenant un manchon (110) pouvant être inséré dans le bloc de soupape (10) et un élément de fermeture (130), dans laquelle
- le manchon (110) comprend une première zone d'extrémité (111) et la première zone d'extrémité (111) peut être reliée au bloc de soupape (10),
- le manchon (110) comprend une seconde zone d'extrémité (112) opposée à la première zone d'extrémité (111), dans laquelle la seconde zone d'extrémité (112) présente une ouverture frontale (114) dans une extrémité frontale (113), et
- le manchon (110) forme une enveloppe (117) entre la première zone d'extrémité (111) et la seconde zone d'extrémité (112), laquelle enveloppe comporte un côté extérieur et un côté intérieur, et l'enveloppe (117) du manchon (110) présente une pluralité de passages d'enveloppe (119) séparés par des nervures d'enveloppe (118), et
- l'élément de fermeture (130) est disposé de manière à pouvoir se déplacer dans le manchon (110), dans laquelle l'élément de fermeture (130) peut se déplacer entre une première position et une seconde position, et dans laquelle, dans la première position, une liaison fluidique entre l'ouverture frontale (114) et les passages d'enveloppe (119) est libérée et, dans la seconde position, une liaison fluidique entre l'ouverture frontale (114) et les passages d'enveloppe (119) est bloquée,
dans laquelle
les passages d'enveloppe (119) s'étendent le long de l'enveloppe (117) depuis la première zone d'extrémité (111) jusqu'à la seconde zone d'extrémité (112) et forment une hauteur de passage, et
dans laquelle l'élément de fermeture (130) présente, partant d'une surface d'étanchéité (120) de l'élément de fermeture (130) comportant un premier diamètre, un tracé rétréci sur un deuxième diamètre au milieu d'extension de l'élément de fermeture (130) jusqu'à un troisième diamètre, dans laquelle le deuxième diamètre est inférieur au premier diamètre, et le troisième diamètre est formé de manière plus grande que le deuxième diamètre,
**caractérisée en ce que**
les passages d'enveloppe présentent un rapport hauteur-largeur d'au moins 3:1, dans laquelle les passages d'enveloppe dans l'enveloppe forment au total une largeur d'au moins 75 % de la circonférence extérieure d'enveloppe, de préférence de 80 % de la circonférence extérieure d'enveloppe, dans laquelle les passages d'enveloppe (119) dans l'enveloppe (117) sont formés en s'effilant selon une forme trapézoïdale dans leur extension depuis le côté extérieur d'enveloppe jusqu'au côté intérieur d'enveloppe, dans laquelle la largeur des passages d'enveloppe (119) sur le côté intérieur d'enveloppe est comprise dans une plage allant de 20 à 90 % des passages d'enveloppe (119) sur le côté extérieur d'enveloppe.

2. Soupape hydraulique intégrée (100) selon la revendication 1, dans laquelle la largeur des passages d'enveloppe (119) diminue dans le tracé commençant depuis le côté extérieur d'enveloppe et allant vers le côté intérieur d'enveloppe.

3. Soupape hydraulique intégrée (100) selon l'une des revendications précédentes, dans laquelle la largeur des nervures d'enveloppe (118) est constante dans le tracé commençant depuis le côté extérieur d'enveloppe et allant vers le côté intérieur d'enveloppe.

4. Soupape hydraulique intégrée (100) selon l'une des revendications précédentes, dans laquelle la largeur des passages d'enveloppe (119) sur le côté intérieur d'enveloppe est comprise dans une plage allant de 60 à 80 %, de préférence de 73 à 80 %, des passages d'enveloppe (119) sur le côté extérieur d'enveloppe.

5. Soupape hydraulique intégrée (100) selon l'une des revendications précédentes, dans laquelle, dans l'enveloppe (117), au moins 8, de préférence 10 passages d'enveloppe (119) sont formés côte à côte dans la direction circonférentielle de l'enveloppe (117) et dans laquelle les nervures d'enveloppe (118) séparant les passages d'enveloppe (119) forment au total, dans la direction circonférentielle, une largeur d'au maximum 25 % de la circonférence extérieure d'enveloppe, de préférence 20 % de la circonférence extérieure d'enveloppe.

6. Soupape hydraulique intégrée (100) selon l'une des revendications précédentes, dans laquelle l'élément de fermeture (130) présente une surface d'étanchéité (120) destinée à venir en prise avec une surface d'étanchéité complémentaire (120a) formée dans le manchon (110) afin de bloquer de manière étanche et interactive une liaison fluidique dans la seconde position.

7. Soupape hydraulique intégrée (100) selon l'une des revendications précédentes, dans laquelle le manchon (110) présente un mécanisme de fixation qui est conçu pour recevoir le manchon dans un élément de recouvrement de commande (132) d'un bloc de commande pour la commande de la soupape hydraulique intégrée (100), en particulier pour fixer le manchon.

8. Agencement de soupape (1), comportant un bloc de soupape (10) et une soupape hydraulique intégrée (100) comportant un manchon (110) pouvant être inséré dans le bloc de soupape (10) et un élément de fermeture (130) selon l'une des revendications précédentes, dans lequel le bloc de soupape (10) présente une ouverture de réception (11) étagée dans laquelle est disposée la soupape hydraulique intégrée (100), et le bloc de soupape (10) présente un raccord A associé à l'ouverture frontale (114) et un raccord B librement associé aux passages d'enveloppe (119).

9. Agencement de soupape (1) selon la revendication 8, dans lequel les passages d'enveloppe (119) présentent une hauteur de passage d'au moins 90 % de la zone d'alésage normalisée du raccord B.

10. Agencement de soupape (1) selon la revendication 9, dans lequel l'ouverture frontale (114) présente un premier diamètre (115) qui correspond de préférence à au moins 90 % d'un deuxième diamètre (116) du manchon (110) pouvant être inséré.

11. Système hydraulique comportant au moins un composant à entraînement hydraulique et un agencement de soupape (1) selon l'une des revendications 8 à 10 pour la commande et/ou la commutation et/ou le blocage du composant à entraînement hydraulique.
